# EUROPEAN PATENT SPECIFICATION

(11) **EP 1 353 062 B1**
(45) Date of publication and mention of the grant of the patent: **06.10.2004**
(21) Application number: 03251498.6
(22) Date of filing: 12.03.2003
(51) Int. Cl.: F02M 61/18, F02M 61/16

(54) **Fuel injector having an orifice plate with offset coining angled orifices**
Kraftstoffeinspritzventil mit einer Düsenplatte und geneigten Auslassöffnungen
Injecteur de carburant avec une plaque d'orifices et des orifices inclinés

(30) Priority: 15.03.2002 US 97628; 15.03.2002 US 97387
(43) Date of publication of application: 15.10.2003
(60) Divisional application: 04012412.5
(73) Proprietor: Siemens VDO Automotive Corporation, Auburn Hills, Michigan 48326-2980 (US)
(72) Inventor: Spencer, Dale Stewart, Newport News, VA 23605 (US)
(74) Representative: French, Clive Harry

(56) References cited:
- EP-A- 0 498 931
- US-A- 5 716 009
- US-A1- 2001 017 325
- US-A1- 2002 038 825

## Description

The present invention relates to a valve assembly according to the preamble of claim 1, as known for example from document US2001/017315A.

Most modern automotive fuel systems utilise fuel injectors to provide precise metering of fuel for introduction into each combustion chamber: Additionally, the fuel injector atomises the fuel during injection, breaking the fuel into a large number of very small particles, increasing the surface area of the fuel being injected, and allowing the oxidiser, typically ambient air, to more thoroughly mix with the fuel prior to combustion. The precise metering and atomisation of the fuel reduces combustion emissions and increases the fuel efficiency of the engine.

An electro-magnetic fuel injector typically utilises a solenoid assembly to supply an actuating force to a fuel-metering valve. Typically, the fuel metering valve is a plunger-style needle valve which reciprocates between a closed position, where the needle is seated in a valve seat to prevent fuel from escaping through a metering orifice into the combustion chamber, and an open position, where the needle is lifted from the valve seat, allowing fuel to discharge through the metering orifice for introduction into the combustion chamber.

Fuel flowing through a fuel injector typically exits at an outlet end of the fuel injector. The outlet end typically have a disk or plate with at least one orifice to control, in part, the spray pattern and the direction of the fuel exiting the fuel injector.

An orifice extending along an axis perpendicular to a surface of a work piece (i.e. a straight orifice) is believed to be formed by drilling or by punching through the work piece. One method of drilling is by electric discharge machining (EDM) that can form orifices of 150 to 200 microns in diameter. It is believed that one of the many disadvantages of EDM is the fact that the holes are typically formed without any favourable entry or exit geometry for the orifices, thereby affecting the flow through the orifices. Another method is by laser machining the orifices on the work piece or the plate. Yet another method can be by stamping or punching the orifices and then coining each edge of the orifice. However, it is believed that the orifices formed by these methods do not allow for spray targeting of the fuel as the fuel leaves the orifices of the injector.

In order to target the fuel spray, it is believed that orifices can be angled to a desired angle relative to a longitudinal axis of the fuel injector. Such angled orifices can be formed by any of the above methods, albeit at, it is believed, a much greater cost than a straight orifice. Another method utilises dimpling a portion of the work piece on which a straight orifice has already been formed with a right circular cone. However, it is believed that such dimpled orifice plate increases a sac volume between the fuel injector closure tip and the orifice plate. This increased sac volume, during a non-injection event, causes fuel to remain in the sac that vaporises and causes rich/lean shifts and hot start issues, which are undesirable.

### Summary of the Invention

The present invention provides for a valve assembly according to claim 1 and a fuel injector according to claim 11. The fuel injector has a housing extending along a longitudinal axis, the housing including an inlet, an outlet and a passageway disposed between the inlet and the outlet. The fuel injector includes an electromagnetic actuator proximate the inlet and an orifice plate proximate the outlet. The electromagnetic actuator having an armature, an electromagnetic coil a closure member and a valve seat. The closure member is operable to occlude fuel flow to the outlet in a first position and is operable to permit fuel flow to the outlet in a second position. The orifice plate is located proximate the outlet, the orifice plate having first and second plate surfaces spaced at a predetermined distance along a longitudinal axis and an orifice. The orifice includes a first surface and a second surface being spaced from the first surface. The first orifice surface has a first region including a plastically deformed material of the orifice oriented in a first direction oblique to the longitudinal axis, and the second orifice surface has a second region including a plastically deformed material of the orifice oriented in a second direction oblique to the longitudinal axis.

The present invention also provides for a valve assembly for controlling fluid flow. The valve assembly comprises a body having a first end and a second end, an actuator disposed in the body, a closure member operable by the actuator to occlude fluid flow in one position and operable to permit flow in another position, a surface contiguous to the closure member in the one position so as to form a sealing surface, and an orifice plate proximate one of the first and second ends. The orifice plate includes first and second plate surfaces spaced at a predetermined distance from one another along a longitudinal axis, and an orifice. The orifice including a first orifice surface and a second orifice surface being spaced from the first orifice surface. The first orifice surface has a first region including a first surface characteristic being oriented in a first direction oblique to the longitudinal axis. The second orifice surface has a second region including a second surface characteristic being oriented in a second direction oblique to longitudinal axis.

### Brief Descriptions of the Drawings

The accompanying drawings, which are incorporated herein and constitute part of this specification, illustrate an embodiment of the invention, and, together with the general description given above and the detailed description given below, serve to explain the features of the invention.

Fig 1 illustrates a fuel injector with an orifice of a preferred embodiment.

Figs. 2a-2e illustrate the characteristics of an orifice and orifice plate in Fig. 1 prior to the formation of the angled orifice and after the formation of the angled orifice.

Figs. 3a-3c illustrates the formation of an angled orifice in an orifice plate according to another preferred embodiment.

Figs. 4a-4c illustrate the formation of an angled orifice in an orifice plate according to yet another preferred embodiment.

Figs. 5a-5f illustrate the formation of an angled orifice in an orifice plate according to yet a further embodiment.

### Detailed Description of Certain Embodiments

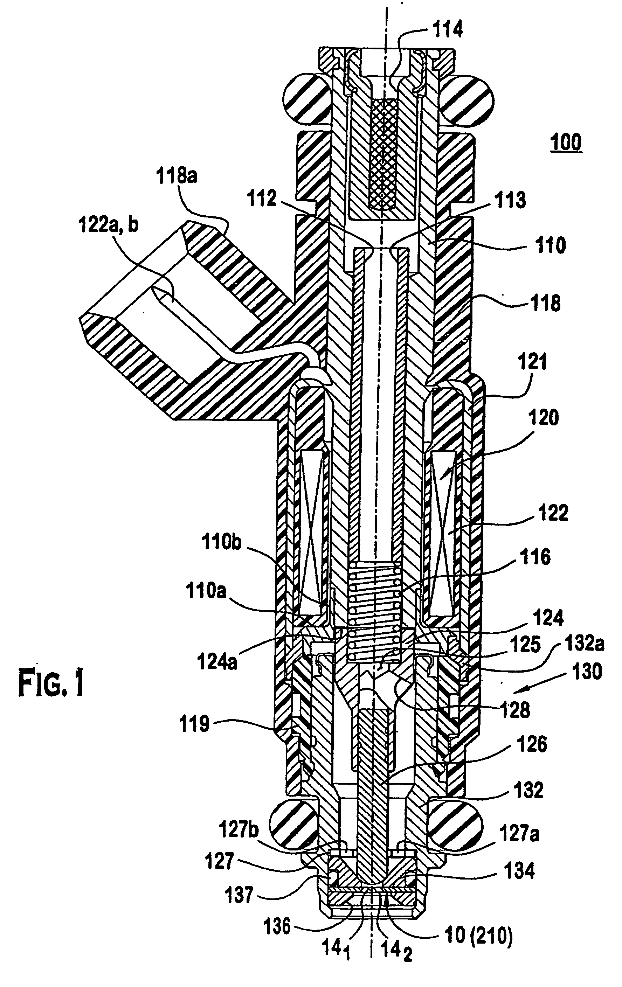

Figs. 1-5 illustrate certain embodiments of the present invention. In particular, a fuel injector 100 comprising an embodiment of the orifice plate 10 is illustrated in Fig. 1. The fuel injector 100 includes a fuel inlet tube 110, an adjustment tube 112, a filter assembly 114, a coil assembly 118, a coil spring 116, an armature 124, a closure member 126, a non-magnetic shell 110a, a first overmould 118, a valve body 132, a valve body shell 132a, a second overmould 119, a coil assembly housing 121, a guide member 127 for the closure member 126, a valve seat 134, an orifice plate 10, a backup retainer member 136, and an O-ring seal 137.

The guide member 127, the valve seat 134, the orifice plate 10, the backup retainer member 136, and the small O-ring seal 137 form a stack that is disposed at the outlet end of fuel injector 100, as shown in a number of commonly assigned patents, such as U.S. Pat. No. 5,174,505. Armature 124 and the closure member 126 are joined together to form an armature/needle valve assembly. It should be noted that one skilled in the art could form the assembly from a single component. Coil assembly 120 comprises a plastic bobbin on which an electromagnetic coil 122 is wound.

Respective terminations of coil 122 connect to respective terminals 122a, 122b that are shaped and, in co-operation with a surround 118a formed as an integral part of overmould 118, to form an electrical connector for connecting the fuel injector to an electronic control circuit (not shown) that operates the fuel injector.

Fuel inlet tube 110 can be ferromagnetic and comprises a fuel inlet opening at the exposed upper end. Filter assembly 114 can be fitted proximate to the open upper end of adjustment tube 112 to filter any particulate material larger than a certain size from fuel entering through inlet opening before the fuel enters adjustment tube 112.

In the calibrated fuel injector, adjustment tube 112 has been positioned axially to an axial location within fuel inlet tube 110 that compresses preload spring 116 to a desired bias force that urges the armature/needle valve such that the rounded tip end of closure member 126 can be seated on valve seat 134 to close the central hole through the valve seat. Preferably, tubes 110 and 112 are crimped together to maintain their relative axial positioning after adjustment calibration has been performed.

After passing through adjustment tube 112, fuel enters a volume that is cooperatively defined by confronting ends of inlet tube 110 and armature 124 and that contains preload spring 116. Armature 124 comprises a passageway 128 that communicates volume 125 with a passageway 113 in valve body 130, and guide member 127 contains fuel passage holes 127a, 127b. This allows fuel to flow from volume 125 through passageways 113, 128 to valve seat 134.

Non-ferromagnetic shell 110a can be telescopically fitted on and joined to the lower end of inlet tube 110, as by a hermetic laser weld. Shell 1 10a has a tubular neck that telescopes over a tubular neck at the lower end of fuel inlet tube 110. Shell 110a also has a shoulder that extends radially outwardly from neck. Valve body shell 132a can be ferromagnetic and can be joined in fluid-tight manner to non-ferromagnetic shell 1 10a, preferably also by a hermetic laser weld.

The upper end of valve body 130 fits closely inside the lower end of valve body shell 132a and these two parts are joined together in fluid-tight manner, preferably by laser welding. Armature 124 can be guided by the inside wall of valve body 130 for axial reciprocation. Further axial guidance of the armature/needle valve assembly can be provided by a central guide hole in member 127 through which closure member 126 passes.

In the closed position shown in FIG. 1, a working gap exists between the annular end face 110b of fuel inlet tube 110 and the confronting annular end face 124a of armature 124. Coil housing 121 and tube 12 are in contact at 74 and constitute a stator structure that is associated with coil assembly 18. Non-ferromagnetic shell 110a assures that when electromagnetic coil 122 is energised, the magnetic flux will follow a path that includes armature 124. Starting at the lower axial end of housing 34, where it is joined with valve body shell 132a by a hermetic laser weld, the magnetic circuit extends through valve body shell 132a, valve body 130 and eyelet to armature 124, and from armature 124 across working gap 72 to inlet tube 110, and back to housing 121. When electromagnetic coil 122 is energised, the spring force on armature 124 can be overcome and the armature is attracted toward inlet tube 110 reducing working gap 72. This unseats closure member 126 from valve seat 134 open the fuel injector so that pressurised fuel in the valve body 132 flows through the valve seat orifice and through angled orifices 141 and 142 formed on the orifice plate 10. It should be noted here that the actuator may be mounted such that a portion of the actuator can disposed in the fuel injector and a portion can be disposed outside the fuel injector.

When the coil ceases to be energised, preload spring 116 pushes the armature/needle valve closed on valve seat 134. Further operations of the fuel injector are set forth in U.S. Pat. No. 5,494,225 issued on Feb. 27, 1996.

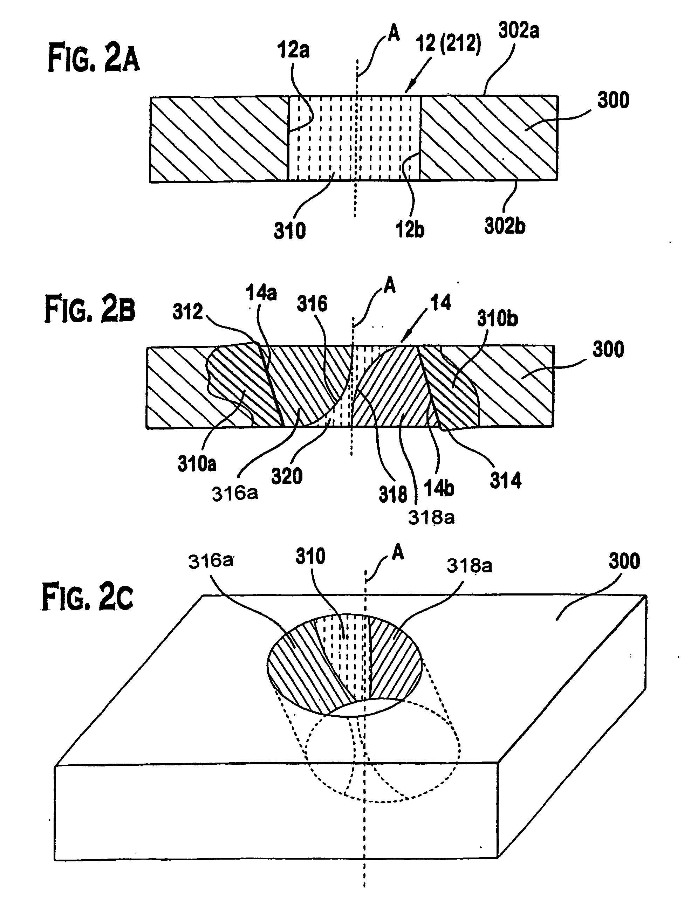

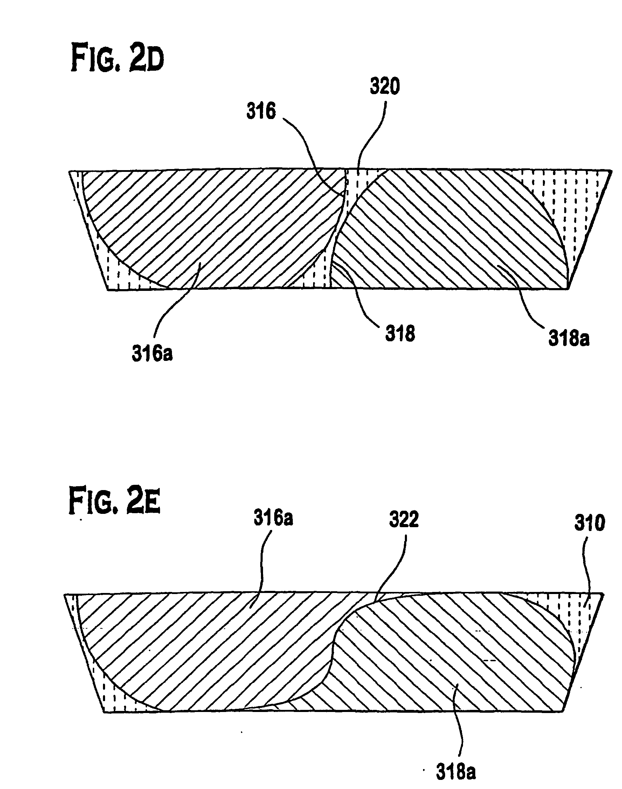

Figures 2a and 2b show respective side view of an orifice 12 of a workpiece 300 and the transformation of orifice 12 into an angled orifice 14. The orifice 12 is formed in the work piece 300, shown in Fig. 2a. The orifice 12 is defined by orifice surfaces 12a and 12b having generally uniform surface characteristics throughout. Subsequent to the formation of an angled orifice (angled with respect to the surface of the work piece 300) materials on the orifice surfaces 12a and 12b are removed and sheared away, leaving behind generally parallel ridges or region 310 uniformly distributed about the circumferential surface of the orifice 12, shown in Fig. 2b. As the orifice 14 is formed, in Fig. 2b, materials of the orifice surfaces are plastically deformed and cold worked (shown here as regions 310a and 310b) as the respective tool head cuts into the crystalline structure of the orifice surfaces of the orifice. Since the tool heads are moved (as will be described further on in this disclosure) in opposite directions with respect to the orifice 12, a transition region 320 is formed between a first area 316a bounded by partial sections of the plate surfaces 302a, 302b and line 316 and a second area 318a bounded by partial sections of surfaces 302a, 302b and line 318. The first bounded area 316a has surface characteristics oriented in a first direction due to the movement of the first tool head, which causes a change in the crystalline structure of the material of the orifice. To better illustrate the characteristics of the angled orifice, the orifice is unrolled in Figs 2d and 2e. That is, Figs 2d and 2e illustrate a 360 degrees panoramic view of the surfaces of the orifice as viewed by an observer rotating about the longitudinal axis A-A within the orifice. As seen in the "virtual" unrolling of the orifice 14 in Figs. 2d and 2e, the second bounded area 318a has surface characteristics oriented in a second direction different from the first direction due to the movement of the second tool head, which also causes a change in the crystalline structures of the orifice plate. It should be noted that the crystalline structures of the transition. region could be different from the crystalline structures of the first and second bounded areas. Similarly, the crystalline structures of the first bounded area can be different from the second bounded area. Although the first and second bounded areas 316a, 318a are shown as being bounded by partial sections of the surfaces 302a, 302b and two lines 316 and 318, in certain cases, depending on the geometries of the cutting tool(s) and other dimensional parameters of the orifice, the line 316 can merge with line 318 so as to define a single continuous line 322 between the two contiguous first and second areas in place of the transition region 320, shown here in Fig. 2e.

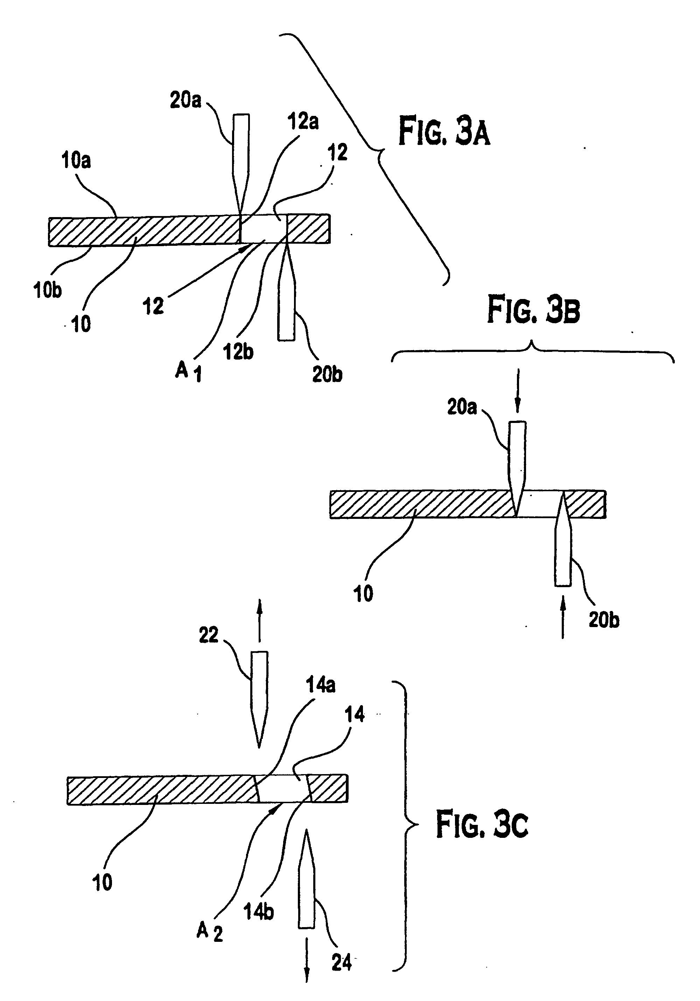

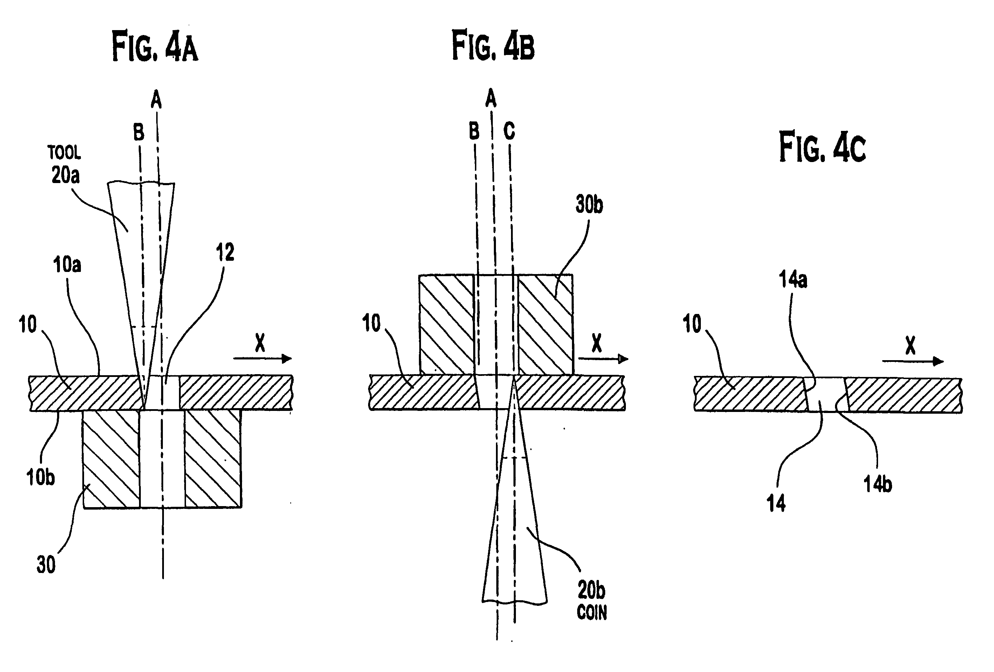

Figs 3a-3c illustrate one technique of how the perpendicular orifice 12 in Fig. 2a can be transformed into an angled orifice 14 in Fig. 2b. In particular, this technique, with reference to Figs. 3a-3c, illustrates a generally simultaneous formation of a right-angled orifice 12 to an angled orifice 14 for plate 10. Figs. 4a-4c, on the other hand, illustrate another technique that allows sequential formation of a right-angled orifice 12 to an angled orifice 14 in the orifice plate. As used herein, the term "orifice" denotes an "opening" that extends between a first surface 10a to a second surface 10b of a member, which is preferably is a plate. The "opening" can be of a suitable cross-section, such as, for example, circular, oval, rectangular, square or polygonal. Preferably, the orifice has a circular opening with straight orifice surfaces 12a and 12b (of orifice 12) and an oval opening subsequent to the formation of angled orifice surfaces 14a and 14b (of orifice 14).

The orifice plate 10 can include a member of a suitable cross-section, such as, for example, a plate with a first surface 10a that can be linear and preferably parallel to a linear second surface 10b; a plate having non-parallel first surface 10a (which can be a substantially planar surface) to the second surface 10b (which can also be a substantially planar surface); or a plate with a first surface 10a that can be curvilinear and preferably parallel to a curvilinear second surface 10b. The orifice 10 can include a right-angled orifice 12 pre-formed thereon or the right-angled orifice 12 can be formed prior to the formation of the angled orifice 14. Preferably, the formations of the right-angled orifice can be done prior to the formation of an angled orifice. The right-angled orifice 12 can be formed by a suitable technique, such as, for example, electro-discharge-machining (EDM), laser drilling or by mechanical drilling/punching. The plate or metal sheet can be between approximately 0.003 - 0.010 inch (76.2-254.0 microns) in thickness. The plate can be any suitable material, such as, for example, metal, composite, monomer or polymer that deforms upon application of a compressive load. Preferably, the orifice plate 10 can be a stainless steel plate or sheet having linearly parallel first and second surfaces 10a and 10b separated by a distance of approximately 0.006 inch (152.4 microns), which plate also has an orifice 12 pre-formed by a suitable technique such as, for example, by mechanical drilling, punching, laser drilling or by Electric Discharge Machining.

With reference to Figs. 3a-3c, a generally simultaneous operation that forms an angled orifice 14 is preferably shown. Specifically, an orifice plate 10 can be provided with a preformed orifice 12 of a first predetermined cross-sectional area A₁. The first cross-sectional area A₁ is referenced as an area generally transverse to the axis A on either surface 302a or 302b. A first punch tool 20a and a second punch tool 20b are placed on opposite sides of the plate 10 such that a longitudinal axis extending along each of the tool is substantially parallel to the longitudinal axis A. The first punch tool 20a can be provided with a first tip 22 having a suitable cross-section, such as, for example, a cone, a right triangle, square, polygonal or a wedge. The second punch tool 20b can be provided with a second tip 24 having a suitable cross-section, such as, for example, a cone, a right triangle, square, polygonal or a wedge. Preferably, the tips 22 and 24 are conic. Also desirably, the formation of the orifice 14 can be performed in sequence by the tool heads as a function of the speed of the press and size and progression of the die.

Each of the tips 22 and 24 can be aligned such that, as each tip is moved towards the orifice 12, the respective tip can be contiguous to a portion of the edge of the orifice 12 (Figs. 3a and 4a). As each tip is further moved in a direction along the axis A (Fig. 3b), the orifice surfaces 12a and 12b are plastically deformed, resulting in a permanent deformation of the orifice surfaces 10a and 10b (Figs. 2b and 3c). Although the wall surfaces have been described as separate portions, it should be understood that each surface is part of an area defining the orifice. Each of the orifice surfaces 12a and 12b can be deformed into respective orifice surfaces 14a and 14b that are oblique with respect to the longitudinal axis, or at least one orifice surface is oblique to both the axis A and the other orifice surface (Fig. 2b). Moreover, due to the punch tools, the walls surfaces, 14a, 14b are deformed so as to define a second predetermined cross-sectional area A₂ (as referenced generally transverse to axis A) of the orifice 14 where A₂>A₁ of the area of the orifice 12. Furthermore, some materials from the orifice surfaces 10a and 10b are removed while other materials of the orifice surfaces are plastically deformed.

To ensure that an appropriate amount of force can be transmitted to one of the tips so that each tip can plastically deform the wall or orifice surfaces of the orifice 12, it is preferable to have at least one tip moving relative to the other tip along the longitudinal axis at substantially same time so that the force transmitted to one of the tip can be supported by the other tip.

The formation of an angled orifice can be done in sequence in another preferred embodiment, shown here in Figs 4a-4c. Here, an orifice plate 10 is again preferably provided with an orifice 12 having its surface extending along the axis A. One of the first and second surfaces 10a and 10b can be placed against a first die bushing 30a. The punch tool can be used to plastically deform the orifice surfaces 10a or 10b from the other of the first and second surfaces 10a, 10b (Figs. 4a and 4b) by moving the punch tool along a first axis B that can be parallel and offset to the axis A. This results in an orifice plate 10 having a orifice surface 14a oriented in an oblique direction relative to the axis A. The plate 10 is then moved along a direction X. A second die bushing 30b can be placed against the other of the first and second surfaces 10a and 10b (i.e. surface 10a) while the second punch tool 20b can be moved along a second axis C parallel to and offset to axis A. This results in the orifice plate having an orifice surface 14b oriented in an oblique direction relative to the longitudinal axis A or to the orifice surface 14a.

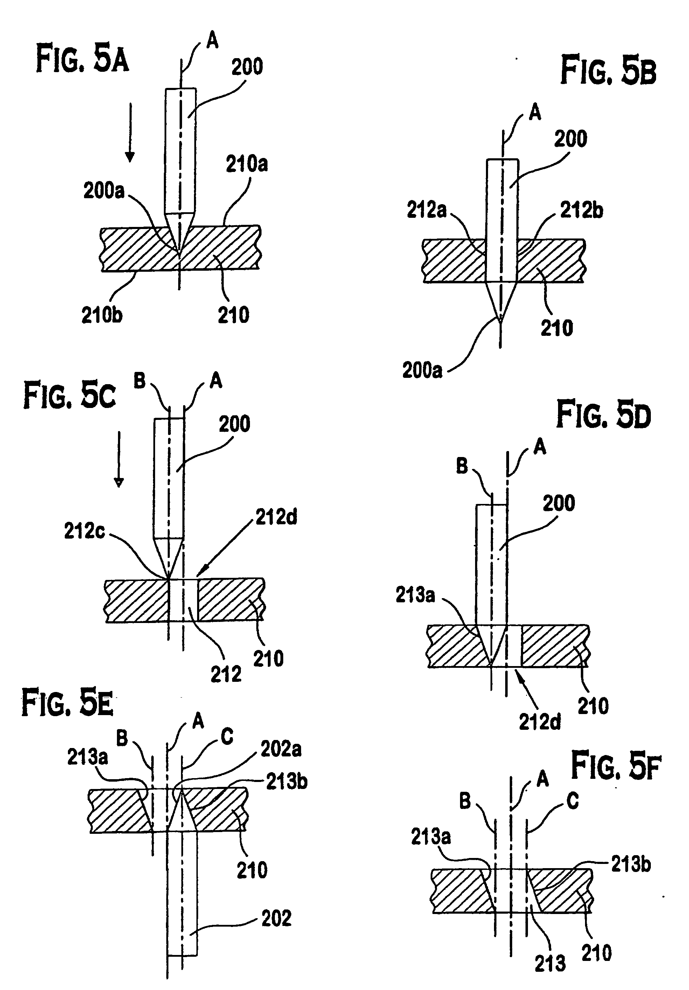

In another preferred embodiment, illustrated in Figs 5a-5f, a first punch tool 200 can be used to punch a first surface 210a of a metal sheet 210, a first orifice 212 having orifice surfaces 212a and 212b perpendicular to one of the first and second substantially planar surfaces 210a and 210b of the metal sheet 210, which first punch tool can be used to deform the first surface 210a to a first oblique orifice surface 211a of the orifice and a second punch tool 202 can be used to deform the second orifice surfaces 210b to a second oblique orifice surface 211b. Specifically, the first punch tool 200 can be moved in a first axis A that can be perpendicular to one of the first and second surfaces 210a and 210b (Fig. 5a). As the first punch tool moves through the metal sheet 210, an orifice 212 having parallel orifice surfaces 212a and 212b are formed (Fig. 5b). The first punch tool is then withdrawn and is translated by a predetermined offset from the axis A, such that a tip 200a can be generally contiguous to one of edges 212c and 212d formed between the surfaces 210a, 210b and the orifice surfaces 212a and 212b (Fig. 5c). The first punch tool 200 can be moved along a second axis B, which axis B is preferably parallel to the first axis A, and can be also perpendicular to one of the surfaces 210a and 210b so as to plastically deform the first orifice surface 212a to a first oblique orifice surface 213a (Fig. 5d). The second punch tool 202, which could be an identical punch tool to the first punch tool 200, can be aligned with a third axis C such that, preferably, a tip 202a, is contiguous with the edge 212d of the orifice 212. The third axis C can be preferably parallel to and offset by a predetermined distance from the first axis A. As the punch tool 202 is moved along the axis C, the tip 202a plastically deforms the orifice surface 212b of the orifice 212 so as to form a second oblique orifice surface 213b. The first oblique orifice surface 213a and the second oblique orifice surface 213b are preferably parallel to each other and oblique with respect to the first axis A. It should be noted here that, instead of a second punch tool, the workpiece could be flipped 180 degrees such that the first punch tool can be used to also punch surface 210b. It should also be noted here that an area that is formed by an opening of the oblique orifice 213 could be greater than an area that is formed by an opening of the orifice 212. Further details of the processes involved in forming the angled orifice are described in later parts of the present description.

As used herein, the term plastic deformation indicates that a material 300 of the orifice plate 10, specifically the orifice 12, can be deformed beyond the elastic limit, thereby resulting in a permanent deformation of the material in a surrounding area 310 (Figs. 1a-1c). The permanently deformed material may provide a characteristic bulged or raised portion 312 or 314 of plastically deformed material bulging away from the planar surface near respective intersections between the orifice and the surfaces 302a or 302b of the orifice 14 or 213. Additionally, due to slippage of crystalline structures prevalent in the preferred material (stainless steel) of the orifice plate, the surrounding area 310 of the orifice 14 or 212 can be hardened by cold-working. Cold-worked metal results in new dislocations being produced when the metal is deformed. As the number of dislocations in the crystal change, they should become tangled or pinned and would not be able to move. This should strengthen the material near or surrounding the orifice plate, which should make the plate as whole harder to deform due to the cold working process. For the angled orifice 14 or 213, compressive stresses are beneficial in increasing resistance to fatigue failures, corrosion fatigue, stress corrosion cracking, hydrogen assisted cracking, fretting, galling and erosion caused by fluid flow cavitation. The orifice 14 or 213 may also benefit due to work hardening, intergranular corrosion resistance, surface texturing and closing of porosity in the metal. Also, the cold working, or expansion, of the orifice 14 or 213 creates compressive stress zones around the orifice. These compressive stress zones around the orifice 14 or 213 should provide an increase in hardness and improved fatigue resistance of the material that the orifice is made of. It should be noted that, in a suitable application, the cold-worked metal plate or metal sheet used to form the orifice disc can also be heat treated by a suitable heat treatment such as, for example, annealing, process-annealing, normalising, patenting, spherodizing, or tempering for one or more purposes such as (1) to remove stresses; (2) to induce softness; (3) to alter ductility, toughness, electrical; magnetic or other physical properties; (4) to refine the crystalline structure; (5) to remove gases; or (6) to produce a desired micro-structure for the sheet metal or plate.

## Claims

1. A valve assembly for controlling fluid flow, the valve assembly comprising:
a body ( 132) having a first end and a second end;
an actuator (124) operable within the body;
a closure member (126) operable by the actuator to occlude fluid flow in one position and operable to permit flow in another position;
a surface (134) contiguous to the closure member in the one position so as to form a sealing surface; and
an orifice plate (10; 210) proximate one of the first and second ends, the orifice plate including: first (210a) and second (210b) plate surfaces spaced at a predetermined distance from one another along a longitudinal axis (A); and an orifice (212) extending between the first plate surface and second plate surface, the orifice including a first orifice surface (316a) and a second orifice surface (318a) being spaced from the first orifice surface,
**characterised in that** the first orifice surface has a first region including a plastically deformed material of the orifice oriented in a first direction oblique to the longitudinal axis, the second orifice surface has a second region including a plastically deformed material of the orifice oriented in a second direction oblique to the longitudinal axis

2. The valve assembly according to claim 1, wherein the predetermined distance comprises a distance between approximately 0.001 and 0.010 inch (25.4-254.0 microns).

3. The valve assembly according to claim 2, wherein the predetermined distance comprises approximately 0.006 inch (152.4 microns):

4. The valve assembly according to any preceding claim, wherein the first region is contiguous to the second region such that a continuous transition line separates the first region from the second region.

5. The valve assembly according to any preceding claim, wherein the first region is spaced from the second region by a transition region.

6. The valve assembly according to claim 5, wherein the transition region comprises crystalline structures different from crystalline structures of the first region and the second region.

7. The valve assembly according to any preceding claim, wherein an intersection of one of the first and second plate surfaces with one of the first and second orifice surfaces proximate at least one of the first and second regions includes a raised portion.

8. The valve assembly according to any preceding claim, wherein the first region includes a crystalline structure different from a crystalline structure of the second region.

9. The valve assembly according to any preceding claim, wherein the first direction is generally opposite the second direction.

10. The valve assembly according to any preceding claim, wherein the first direction is generally oblique to the second direction.

11. A fuel injector (100) having a housing extending a longitudinal axis, the housing including an inlet, an outlet and a passageway disposed between the inlet and the outlet, the fuel injector comprising:
a valve assembly according to any preceding claim, wherein the actuator is an electromagnetic actuator proximate the inlet, the electromagnetic actuator including an armature and an electromagnetic coil; and wherein
the closure member is operable via the electromagnetic actuator.

## Patentansprüche

1. Ventilbaugruppe zur Steuerung eines Flüssigkeitsstroms, wobei die Ventilbaugruppe umfasst:
ein Gehäuse (132) mit einem ersten Ende und einem zweiten Ende;
einen Aktor (124), der innerhalb des Gehäuses arbeitsfähig ist;
ein Verschlusselement (126), das von dem Aktor so betätigt werden kann, dass es in einer Position den Durchfluss von Flüssigkeit verhindert und in einer anderen Position den Durchfluss ermöglicht;
eine Fläche (134), die in der einen Position an das Verschlusselement angrenzt, so dass eine Dichtfläche gebildet wird; und
eine Öffnungsplatte (10; 210), die in der Nähe eines der beiden Enden angeordnet ist, wobei die Öffnungsplatte aufweist: eine erste (210a) und eine zweite (210b) Plattenoberfläche, die entlang einer Längsachse (A) in einem vorgegebenen Abstand voneinander angeordnet sind; und eine Öffnung (212), die sich zwischen der ersten Plattenoberfläche und der zweiten Plattenoberfläche erstreckt, wobei die Öffnung eine erste Öffnungsfläche (316a) und eine in einem Abstand von der ersten Öffnungsfläche angeordnete zweite Öffnungsfläche (318a) aufweist,
**dadurch gekennzeichnet, dass** die erste Öffnungsfläche einen ersten Bereich aufweist, der ein plastisch verformtes Material der Öffnung enthält, das in einer ersten Richtung schräg zur Längsachse ausgerichtet ist, und die zweite Öffnungsfläche einen zweiten Bereich aufweist, der ein plastisch verformtes Material der Öffnung enthält, das in einer zweiten Richtung schräg zur Längsachse ausgerichtet ist.

2. Ventilbaugruppe nach Anspruch 1, wobei der vorgegebene Abstand ein Abstand zwischen ungefähr 0,001 und 0,010 Zoll (25,4 - 254,0 Mikrometer) ist.

3. Ventilbaugruppe nach Anspruch 2, wobei der vorgegebene Abstand ungefähr 0,006 Zoll (152,4 Mikrometer) beträgt.

4. Ventilbaugruppe nach einem der vorhergehenden Ansprüche, wobei der erste Bereich an den zweiten Bereich angrenzt, so dass eine durchgehende Übergangslinie den ersten Bereich von dem zweiten Bereich trennt.

5. Ventilbaugruppe nach einem der vorhergehenden Ansprüche, wobei der erste Bereich von dem zweiten Bereich durch einen Übergangsbereich getrennt ist.

6. Ventilbaugruppe nach Anspruch 5, wobei der Übergangsbereich kristalline Strukturen umfasst, die von den kristallinen Strukturen des ersten Bereichs und des zweiten Bereichs verschieden sind.

7. Ventilbaugruppe nach einem der vorhergehenden Ansprüche, wobei ein Schnitt einer der beiden Plattenoberflächen mit einer der beiden Öffnungsflächen in der Nähe wenigstens eines der beiden Bereiche einen erhabenen Abschnitt enthält.

8. Ventilbaugruppe nach einem der vorhergehenden Ansprüche, wobei der erste Bereich eine kristalline Struktur aufweist, die von der kristallinen Struktur des zweiten Bereichs verschieden ist.

9. Ventilbaugruppe nach einem der vorhergehenden Ansprüche, wobei die erste Richtung im Großen und Ganzen entgegengesetzt zur zweiten Richtung ist.

10. Ventilbaugruppe nach einem der vorhergehenden Ansprüche, wobei die erste Richtung im Großen und Ganzen schräg zur zweiten Richtung ist.

11. Kraftstoffeinspritzventil (100), das ein sich entlang einer Längsachse erstreckendes Gehäuse aufweist, wobei das Gehäuse einen Einlass, einen Auslass und einen zwischen dem Einlass und dem Auslass angeordneten Durchflusskanal umfasst, wobei das Kraftstoffeinspritzventil umfasst:
eine Ventilbaugruppe nach einem der vorhergehenden Ansprüche, wobei der Aktor ein in der Nähe des Einlasses angeordneter elektromagnetischer Aktor ist, wobei der elektromagnetische Aktor einen Anker und eine Magnetwicklung umfasst; und wobei
das Verschlusselement mittels des elektromagnetischen Aktors betätigt wird.

## Revendications

1. Ensemble formant soupape pour réguler l'écoulement de fluides, l'ensemble formant soupape comprenant :
un corps (132) ayant une première extrémité et une seconde extrémité ;
un actionneur (124) actionnable à l'intérieur du corps ;
un organe de fermeture (126) actionnable par l'actionneur pour bloquer l'écoulement de fluide dans une position et actionnable pour permettre l'écoulement dans une autre position ;
une surface (134) contiguë à l'organe de fermeture dans la une position de sorte à former une surface d'obturation, et
une plaque à orifices (10 ; 210) à proximité de l'une des première et seconde extrémités, la plaque à orifices comprenant :
des première (210a) et seconde (210b) surfaces de plaque espacées d'une distance prédéterminée l'une de l'autre suivant un axe longitudinal (A), et un orifice (212) s'étendant entre la première surface de plaque et la seconde surface de plaque, l'orifice comprenant une première surface d'orifice (316a) et une seconde surface d'orifice (318a) espacée de la première surface d'orifice, **caractérisé en ce que** la première surface d'orifice comporte une première zone comprenant un matériau déformé plastiquement de l'orifice orienté dans une première direction oblique à l'axe longitudinal, **en ce que** la seconde surface d'orifice comporte une seconde zone comprenant un matériau déformé plastiquement de l'orifice orienté dans une seconde direction oblique à l'axe longitudinal.

2. Ensemble formant soupape selon la revendication 1, dans lequel la distance prédéterminée est constituée par une distance comprise entre approximativement 0,001 et 0,010 pouce (25,4-254,0 microns).

3. Ensemble formant soupape selon la revendication 2, dans lequel la distance prédéterminée consiste approximativement en 0,006 pouce (152,4 microns).

4. Ensemble formant soupape selon l'une quelconque des revendications précédentes, dans lequel la première zone est contiguë à la seconde zone de telle sorte qu'une ligne de transition continue sépare la première zone de la seconde zone.

5. Ensemble formant soupape selon l'une quelconque des revendications précédentes, dans lequel la première zone est espacée de la seconde zone par une zone de transition.

6. Ensemble formant soupape selon la revendication 5, dans lequel la zone de transition est constituée de structures cristallines différentes des structures cristallines de la première zone et de la seconde zone.

7. Ensemble formant soupape selon l'une quelconque des revendications précédentes, dans lequel une intersection de l'une des première et seconde surfaces de plaque avec l'une des première et seconde surfaces d'orifice à proximité d'au moins l'une des première et seconde zones comprend une partie en relief.

8. Ensemble formant soupape selon l'une quelconque des revendications précédentes, dans lequel la première zone comprend une structure cristalline différente d'une structure cristalline de la seconde zone.

9. Ensemble formant soupape selon l'une quelconque des revendications précédentes, dans lequel la première direction est autant dire opposée à la seconde direction.

10. Ensemble formant soupape selon l'une quelconque des revendications précédentes, dans lequel la première direction est autant dire oblique à la seconde direction.

11. Injecteur de carburant (100) comportant un logement s'étendant suivant un axe longitudinal, le logement comprenant une entrée, une sortie et une voie de passage disposée entre l'entrée et la sortie, l'injecteur de carburant comprenant :
un ensemble formant soupape selon l'une quelconque des revendications précédentes, dans lequel l'actionneur est un actionneur électromagnétique à proximité de l'entrée, l'actionneur électromagnétique comprenant un induit et une bobine électromagnétique, et dans lequel
l'organe de fermeture est actionnable au moyen de l'actionneur électromagnétique.
